# EUROPÄISCHE PATENTSCHRIFT

(11) **EP 1 090 222 B1**
(45) Veröffentlichungstag und Bekanntmachung des Hinweises auf die Patenterteilung: **12.12.2001**
(21) Anmeldenummer: 99941376.8
(22) Anmeldetag: 23.06.1999
(51) Int. Cl.: F02K 3/072, F02C 7/36, F01D 25/16

(54) **TRIEBWERK MIT GEGENLÄUFIG DREHENDEN ROTOREN**
DRIVING MECHANISM WITH COUNTER-ROTATING ROTORS
MECANISME D'ENTRAINEMENT AVEC ROTORS TOURNANT EN SENS OPPOSES

(30) Priorität: 26.06.1998 DE 19828562
(43) Veröffentlichungstag der Anmeldung: 11.04.2001
(73) Patentinhaber: MTU Aero Engines GmbH, 80995 München (DE)
(72) Erfinder: KLINGELS, Hermann, D-85336 Eching (DE)
(74) Vertreter: Einsele, Rolf W.
(86) Internationale Anmeldenummer: DE9901832
(87) Internationale Veröffentlichungsnummer: WO0000730

(56) Entgegenhaltungen:
- US-A- 2 404 767
- US-A- 4 860 537
- US-A- 4 969 325
- US-A- 5 010 729

## Beschreibung

Die Erfindung betrifft ein Triebwerk mit gegenläufig drehenden Rotoren, die koaxial angeordnet sind und über eine Welle von einer Turbine, deren Arbeitsmedium von einem Gasgenerator mit Lufteinlaß geliefert wird, angetrieben werden.

Bei Triebwerken mit gegenläufig drehenden Rotoren bzw. Propellern ist der Lufteinlaß für den Gasgenerator bzw. das Kerntriebwerk entweder vor oder hinter den Rotoren angeordnet. Bei bekannten Triebwerken, bei denen der Lufteinlaß in Axialrichtung vor den Rotoren angeordnet ist, sind die Rotoren koaxial im Bereich der Niederdruckturbine angeordnet, wobei ein Rotor mit dem rotierenden Niederdruckturbinen-Stator und der andere mit dem Niederdruckturbinen-Rotor verbunden ist.

Bei anderen bekannten Triebwerken, bei denen das Kemtriebwerk mit seinem Lufteinlaß hinter den Rotoren angeordnet ist, werden die Rotoren im allgemeinen über ein Getriebe von einer schnellaufenden Niederdruckturbine angetrieben. Die Rotoren sind in dem Triebwerksgehäuse mit einer fliegenden Lagerung abgestützt, wobei einer der Rotoren auf dem anderen gelagert ist. Problematisch ist, daß bei Triebwerken mit gegenläufig drehenden Rotoren niedrige Lärmwerte nur dann erzielt werden können, wenn der axiale Abstand zwischen den Rotoren verhältnismäßig groß ist. Bei großem Abstand der Rotoren führt deren fliegende Lagerung jedoch zu mechanisch schwer zu beherrschenden, ungünstigen Konstruktionen, da zudem alte von den Rotoren erzeugten Kräfte über das Gehäuse in die Triebswerksaufhängung geleitet werden müssen. Darüber hinaus führt ein Aufbau aus den mit großem axi alen Abstand zueinander angeordneten Rotoren sowie einem dahinterliegenden Lufteinlaß für das Kemtriebwerk zu einer langen und schweren Bauweise, bei der sich die Schwerpunktlage des Triebwerks für dessen Installation ungünstig verschiebt.

Aus der US 4,860,537 ist ein Gasturbinentriebwerk bekannt, bei dem zwischen zwei gegenläufig drehenden Fanrotoren ein Lufteinlaß angeordnet ist. Die Fanrotoren sind mit einer Turbine direkt gekoppelt und werden von zwei separaten Antriebswellen angetrieben. Dabei ist nachteilig, dass zwei Wellen durch das Kemtriebwerk geführt werden müssen. Aufgrund der niedrigen Drehzahlen der Fanrotoren handelt es sich dabei um langsam drehende Wellen, die einen großen Durchmesser aufweisen, um die hohen Momente übertragen zu können.

Das in US 5,010,729 offenbarte Fantriebwerk weist einen Fanrotor mit axial dahinter angeordnetem Lufteinlaß für das Kerntriebwerk auf, wobei der Fanrotor von zwei gegenläufig drehenden Wellen über zwei Getriebe, deren Hohlräder am Gehäuse fixiert sind, angetrieben wird.

Der Erfindung liegt die Aufgabe zugrunde, ein Triebwerk der eingangs beschriebenen Gattung so zu verbessern, daß die Lärmbelastung durch die Rotoren bei möglichst geringer axialer Baulänge niedrig gehalten wird.

Die Lösung dieser Aufgabe ist erfindungsgemäß durch die kennzeichnenden Merkmale von Anspruch 1 gekennzeichnet.

Durch diese Anordnung des Lufteinlasses bzw. der Ansaugöffnung ist es auch bei großem axialen Abstand zwischen den Rotoren möglich, die Stütziager der Rotoren in der Nähe ihrer Schwerpunkte anzuordnen. Zur weiteren Lärmreduzierung kann der axiale Abstand zwischen den Rotoren zudem problemlos vergrößert werden, ohne daß Nachteile hinsichtlich der mechanischen Belastung für das Triebwerk auftreten.

In einer bevorzugten Ausgestaltung ist ein (Lager-)Gehäuse der Rotoren in der A n-triebswelle des in Axialrichtung hinteren Rotors angeordnet.

Bevorzugt sind beide Lager des hinteren Rotors und das Loslager des vorderen Rotors im (Lager-)Gehäuse sowie das Festlager des vorderen Rotors als Zwischenwellenlager an der Welle des hinteren Rotors angeordnet.

Es ist vorteilhaft, daß der hintere Rotor über ein in der Lufteinlaßöffnung angeordnetes, rotierendes Gitter angetrieben ist, wobei dieses bevorzugt so ausgelegt ist, daß der von dem vorderen Rotor in der Luftströmung erzeugte Drall im wesentlichen aufgehoben wird. Auf diese Weise wird erreicht, daß das Gehäuse drallfrei angeströmt wird.

Es ist höchst bevorzugt, daß das eine Hohlrad des Getriebes im (Lager-)Gehäuse gelagert ist.

Der Planetenträger ist zweckmäßigerweise in der Antriebswelle des hinteren Rotors angeordnet.

Weitere Ausgestaltungen der Erfindung sind in den Unteransprüchen beschrieben.

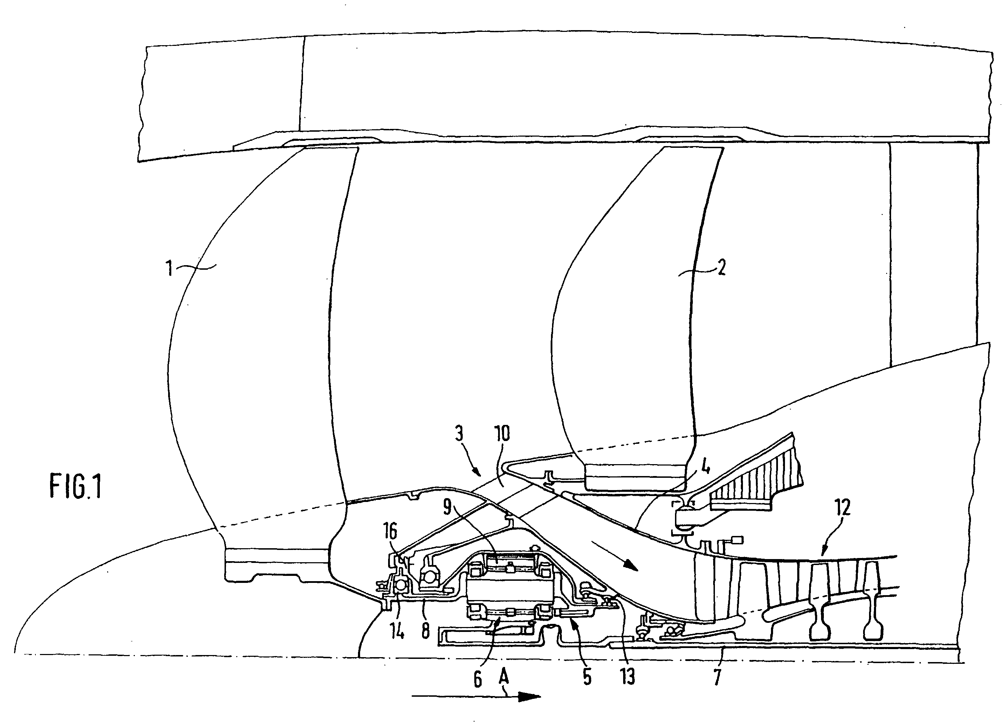

Im folgenden wird die Erfindung anhand eines Ausführungsbeispiels unter Bezugnahme auf eine Zeichnung näher erläutert. Fig. 1 zeigt eine auf den für die Erfindung wesentlichen Teil beschränkte Ansicht eines Triebwerks, in der ein Ausführungsbeispiel des erfindungsgemäßen Triebwerks mit gegenläufig drehenden Rotoren im Längsschnitt dargestellt ist.

Fig. 1 zeigt einen in Axialrichtung A vorderen Rotor 1 und einen hinteren Rotor 2, so daß eine in das Triebwerk eintretende Luftströmung zunächst auf den vorderen Rotor 1 und anschließend auf den hinteren Rotor 2 trifft. Zwischen den beiden Rotoren 1 und 2 ist eine Ansaugöffnung bzw. ein Laufteinlaß 3 angeordnet, durch den die angesaugte Luft durch ein Gehäuse 4 des Triebwerks zu einem im ganzen mit 12 bezeichneten und nicht näher beschriebenen Gasgenerator geleitet wird. Der Gasgenerator 12 liegt im Bereich des hinteren Rotors 2 bzw. in Axialrichtung A dahinter. Der Lufteinlaß 3 verläuft im wesentlichen tangential zur Nabenkontur, so daß er gegen den Eintritt von Fremdkörpern geschützt ist.

Die beiden Rotoren 1 und 2 werden über ein im ganzen mit 5 bezeichnetes Planeten-Differentialgetriebe angetrieben, dessen Sonnenrad 6 mit einer Niederdruckturbinen-Welle 7 gekoppelt ist, die ihrerseits von einer Niederdruckturbine angetrieben wird, welche mit Arbeitsgas aus dem Gasgenerator 12 angetrieben wird. Das Planeten-Differentialgetriebe 5 umfaßt neben dem Sonnenrad 6 einen umlaufenden Planete n-träger 8 und ein Hohlrad 9. Das Hohlrad 9 treibt den hintern Rotor 2 über ein rotierendes, im Lufteiniaß 3 liegendes Gitter 10 an. Das Gitter 10 ist so ausgelegt, daß der von dem vorderen Rotor 1 in der in das Triebwerk eintretenden Luftströmung erzeugte Drall im wesentlichen aufgehoben wird, so daß das Gehäuse 4 im wesentlichen drallfrei angeströmt wird.

Das Hohlrad 9 ist in einem Lagergehäuse 4 gelagert, wodurch eine kompakte und kurze Bauweise des Triebwerks erzielt wird. Der umlaufende Planetenträger 8 des Planeten-Differentialgetriebes 5 ist mit seinem Loslager 13 am Gehäuse 4 und mit seinem Festlager 14, das als Zwischenwellenlager in einer Antriebswelle 16 des hi nteren Rotors 2 angeordnet ist, gelagert und treibt den vorderen Rotor 1 an.

Durch die Integration des Getriebes 5 in der Nabe bzw. Antriebswelle 16 des hint eren Rotors 2 läßt sich mit der vorliegenden Anordnung der beiden Rotoren 1 und 2 einerseits sowie des Lufteinlasses 3 andererseits eine in Axialrichtung A kurze und kompakte Bauweise erzielen. Zur weiteren Lärmreduzierung können die beiden Rotoren 1 und 2 in Axialrichtung A weiter voneinander entfernt werden, ohne daß dieses nachteilige Auswirkungen auf deren Lagerung im Gehäuse 4 und die mechanische Belastung für das Triebwerk hat.

## Patentansprüche

1. Triebwerk mit gegenläufig drehenden Rotoren, die koaxial angeordnet sind und über eine Welle von einer Turbine, deren Arbeitsmedium von einem Gasgenerator mit einem in Axialrichtung (A) zwischen den Rotoren (1,2) angeordneten Lufteinlaß (3) geliefert wird, angetrieben werden, **dadurch gekennzeichnet, daß** die Rotoren (1,2) über ein Planeten-Differentialgetriebe (5) von einer Niederdruckturbinen-Welle (7) angetrieben werden, wobei das Hohlrad (9) des Getriebes (5) den hinteren Rotor (2) und der Planetenträger (8) des Getriebes (5) den vorderen Rotor (1) antreibt.

2. Triebwerk nach Anspruch 1, **dadurch gekennzeichnet, daß** ein Gehäuse (4) der Rotoren (1, 2) in der Antriebswelle (16) des hinteren Rotors (2) angeordnet ist.

3. Triebwerk nach Anspruch 2, **dadurch gekennzeichnet, daß** beide Lager des hinteren Rotors (2) und das Loslager (13) des vorderen Rotors (1) im Gehäuse (4) angeordnet sind.

4. Triebwerk nach Anspruch 3, **dadurch gekennzeichnet, daß** das Festlager (14) des vorderen Rotors (2) als Zwischenwellenlager an der Antriebswelle (16) des hinteren Rotors (2) angeordnet ist.

5. Triebwerk nach einem oder mehreren der vorhergehenden Ansprüche, **dadurch gekennzeichnet, daß** der hintere Rotor (2) über ein im Lufteinlaß (3) angeordnetes, rotierendes Gitter (10) angetrieben ist.

6. Triebwerk nach Anspruch 5, **dadurch gekennzeichnet, daß** das Gitter (10) so ausgelegt ist, daß ein von dem vorderen Rotor (1) in der Strömung erzeugter Drall im wesentlichen aufgehoben wird.

7. Triebwerk nach Anspruch 2 und einem oder mehreren der Ansprüche 3 bis 6, **dadurch gekennzeichnet, daß** das Hohlrad (9) des Getriebes (5) im Gehäuse (4) gelagert ist.

8. Triebwerk nach Anspruch 2 und einem oder mehreren der Ansprüche 3 bis 7, **dadurch gekennzeichnet, daß** der Planetenträger (8) in der Antriebswelle (16) des hinteren Rotors (2) und in dem Gehäuse (4) angeordnet ist.

## Claims

1. An engine with counter-rotating rotors which are positioned coaxially and are driven by means of a shaft of a turbine the working medium of which is supplied by a gas generator with an air intake (3) positioned between the rotors (1, 2) in axial direction
**characterised in that**
the rotors (1, 2) are driven by a low-pressure turbine shaft (7) via a planetary differential gear (5) with the ring gear (9) of the gear (5) driving the rear rotor (2) and the pinion cage (8) of the gear (5) driving the front rotor (1).

2. An engine in accordance with claim 1
**characterised in that**
a housing (4) for the rotors (1, 2) is positioned in the drive shaft (16) of the rear rotor (2).

3. An engine in accordance with claim 2
**characterised in that**
both the bearings of the rear rotor (2) and the movable bearing (13) of the front rotor (1) are positioned in the housing (4).

4. An engine in accordance with claim 3
**characterised in that**
the fixed bearing (14) of the front rotor (2) is positioned on the drive shaft (16) of the rear rotor (2) as an intermediate shaft bearing.

5. An engine in accordance with one or more of the preceding claims
**characterised in that**
the rear rotor (2) is driven by a rotating blade row (10) positioned in the air intake (3).

6. An engine in accordance with claim 5
**characterised in that**
the blade row (10) is designed in such a manner that a twist generated in the flow by the front rotor (1) is essentially eliminated.

7. An engine in accordance with one or more of claims 1 to 6
**characterised in that**
the ring gear (9) of the gear (5) is mounted in the housing (4).

8. An engine in accordance with claim 2 and one or more of claims 1 to 7
**characterised in that**
the pinion cage (8) is positioned in the drive shaft (16) of the rear rotor (2) and in the housing (4).

## Revendications

1. Propulseur comportant des rotors tournant en des sens opposés, qui sont disposés coaxialement et sont entraînés par l'intermédiaire d'un arbre, par une turbine dont le fluide de travail est délivré par un générateur de gaz comportant une admission (3) pour l'air disposée dans la direction axiale (A) entre les rotors (1, 2), **caractérisé en ce que** les rotors (1, 2) sont entraînés par l'intermédiaire d'un engrenage planétaire différentiel (5), par un arbre de turbine basse pression (7), la couronne dentée à denture intérieure (9) de l'engrenage (5) entraïnant le rotor avant (1).

2. Propulseur selon la revendication 1, **caractérisé en ce qu'**un carter (4) des rotors (1, 2) est disposé dans l'arbre d'entraînement (16) du rotor intérieur (2).

3. Propulseur selon la revendication 2, **caractérisé en ce que** les deux paliers du rotor arrière (2) et le palier libre (13) du rotor avant (1) sont disposés dans le carter (4).

4. Propulseur selon la revendication 3, **caractérisé en ce que** le palier fixe (14) du rotor avant (2) est disposé en tant que palier d'arbre intermédiaire sur l'arbre d'entraînement (16) du rotor arrière (2).

5. Propulseur selon une ou plusieurs des revendications précédentes, **caractérisé en ce que** le rotor arrière (2) est entraîné par l'intermédiaire d'une grille rotative (10) disposée dans l'admission (3) pour l'air.

6. Propulseur selon la revendication 5, **caractérisé en ce que** la grille (5) est agencée de telle sorte qu'un tourbillon produit dans l'écoulement par le rotor avant (1) est sensiblement supprimé.

7. Propulseur selon la revendication 2 et une ou plusieurs des revendications 3 à 6, **caractérisé en ce que** la couronne dentée à denture intérieure (9) de l'engrenage (5) est tourillonnée dans le carter (4).

8. Propulseur selon la revendication 2 et une ou plusieurs des revendications 3 à 7, **caractérisé en ce que** le porte-satellites (8) est disposé dans l'arbre d'entraînement (16) du rotor arrière (2) et dans le carter (4).
